# EUROPÄISCHE PATENTANMELDUNG

(11) **EP 2 219 345 A1**
(43) Veröffentlichungstag der Anmeldung: **18.08.2010**
(21) Anmeldenummer: 09002028.0
(22) Anmeldetag: 13.02.2009
(51) Int. Cl.: H04L 29/08

(54) **Übertragung von anlagenbezogenen Betriebsdaten über eine von einem VoIP-Proxy-Server bei einem VoIP-Telefonanruf vermittelte Peer-to-Peer-Datenverbindung über das Internet**

(71) Anmelder: Siemens Aktiengesellschaft, 80333 München (DE)
(72) Erfinder: Göbel, Klaus, 76646 Bruchsal (DE); Weidmann, Rolf, 76185 Karlsruhe (DE)

(57) **Zusammenfassung**

Bei dem erfindungsgemäßen Verfahren werden Betriebsdaten (D) zwischen einer IP-fähigen Anlagenkomponente (1) und einer weiteren IP-fähigen Anlagenkomponente (11) über das Internet (N) übertragen. Die Anlagenkomponenten werden bei einem VoIP-Provider als Teilnehmer angemeldet. Es wird ein Software-Client (CA, CB) der Anlagenkomponenten jeweils mit einer vom Provider zugewiesenen eigenen VoIP-Teilnehmerkennung (LOG), jeweils mit VoIP-Teilnehmerkennungen (URI) der weiteren Anlagenkomponenten und mit einer Host-Adresse (URL) eines VoIP-Proxy-Servers (3) des Providers parametriert. Der jeweilige Client wird beim Proxy-Server mit der eigenen VoIP-Teilnehmerkennung registriert. Es wird eine ereignis- oder zeitgesteuerte Rufaufbau-Datenverbindung (SIP) zum Proxy-Server durch den jeweiligen Client auf Basis eines Signalisierungsprotokolls gestartet und die Teilnehmerkennung der ausgewählten weiteren Anlagenkomponente übermittelt. Zwischen dem Client der Anlagenkomponente und der ausgewählten Anlagenkomponente wird eine Peer-to-Peer-Datenverbindung (P2P) auf Basis jeweils einer vom Proxy-Server mitgeteilten öffentlichen IP-Adresse aufgebaut, über welche der jeweils andere Client über das Internet erreicht werden kann. Es werden anstelle von VoIP-Audio- und Videodaten die anlagenbezogenen Betriebsdaten über dieselbe P2P-Datenverbindung übertragen.

## Beschreibung

Die Erfindung betrifft ein Verfahren zum Übertragen anlagenbezogener Betriebsdaten zwischen einer IP-fähigen Anlagenkomponente und einer weiteren IP-fähigen Anlagenkomponente über das Internet.

Die Erfindung betrifft weiterhin ein Verfahren zum Bedienen und Beobachten zumindest einer IP-fähigen Anlagenkomponente mittels eines IP-fähigen Bedien- und Beobachtungsgerätes über das Internet, wobei anlagenbezogene Betriebsdaten zwischen der IP-fähigen Anlagenkomponente und dem Bedien- und Beobachtungsgerät übertragen werden. Die Datenübertragung bei den beiden Verfahren basiert vorzugsweise auf einem IP-Protokoll.

Die Erfindung betrifft zudem eine geeignete Anwendung der beiden Verfahren.

Die Erfindung betrifft einen ersten und zweiten Software-Client zum Ausführen auf einer prozessorgestützten Steuereinheit eines Gateways bzw. auf einer prozessorgestützten Steuereinheit eines IP-fähigen Bedien- und Beobachtungsgerätes. Beide Software-Clients weisen zum Durchführen von Verfahrensschritten entsprechende, auf der Steuereinheit des Gateways bzw. der IP-fähigen Anlagenkomponente ausführbare Programmschritte auf.

Die Erfindung betrifft außerdem ein Gateway für zumindest eine Anlagenkomponente innerhalb derselben Anlage. Das Gateway weist eine erste Datenschnittstelle zum Austausch von Anlagendaten mit zumindest einer Anlagensteuerung der zumindest einen Anlagenkomponente sowie eine zweite Datenschnittstelle zum Austausch von anlagenbezogenen Betriebsdaten über das Internet auf. Weiterhin weist das Gateway eine prozessorgestützte Steuereinheit zum Ausführen von Programmschritten eines Computerprogramms zum Umsetzen der Daten zwischen der ersten und zweiten Datenschnittstelle auf.

Die Erfindung betrifft zudem eine IP-fähige Anlagenkomponente, welche ein integriertes derartiges Gateway aufweist.

Schließlich betrifft die Erfindung ein Bedien- und Beobachtungsgerät zum Bedienen, Beobachten und/oder Fernwarten einer IP-fähigen Anlagenkomponente. Das Bedien- und Beobachtungsgerät weist eine Datenschnittstelle zur Datenübertragung über das Internet sowie eine prozessorgestützte Steuereinheit zum Ausführen von Programmschritten eines Computerprogramms auf.

Mit "IP-fähig" ist gemeint, dass die Übertragung von Daten von und zu der IP-fähigen Anlagenkomponente bzw. von und zum IP-fähigen Bedien- und Beobachtungsgerät auf Basis eines Internet-Protokolls oder kurz IP-Protokolls (IP für Internet Protocol) erfolgt. Bei einem IP-Protokoll handelt es sich um ein auf Computernetzen weit verbreitetes Netzwerkprotokoll. Es dient insbesondere zur Weitervermittlung von Datenpaketen und zur Wegewahl (Routing) der Datenpakete. Es können zur Sicherstellung der Übertragung von Datenpaketen spezielle Transportprotokolle verwendet werden, wie z. B. das so genannte TCP-Protokoll (Transmission Control Protocol).

Bei einer IP-fähigen Anlagenkomponente kann es sich um eine Maschine handeln, wie z. B. um eine Werkzeug- oder Produktionsmaschine. Die Anlagenkomponente kann auch eine Versorgungseinrichtung sein, wie z. B. eine Stromversorgungseinrichtung. Weiterhin kann es sich bei einer solchen Anlagenkomponente um eine Fernwirkkomponente handeln, welche steuerungstechnische, regelungstechnische und/oder sicherungstechnische Aufgaben in der "Ferne" übernimmt. Derartige Fernwirkkomponenten können z. B. Schalt- und Stellaufgaben in Gas-, Strom-, Wasser- oder Fernwärme-Versorgungsnetzen, in Anlagen der chemischen Industrie oder Petrochemie als Teil der Netzleittechnik übernehmen.

Bei einem Bedien- und Beobachtungsgerät kann es sich um ein so genanntes "Operator Panel" bzw. HMI (für Human Machine Interface) oder um einen Service- oder Leitrechner handeln. Sie können für den stationären Einsatz oder für den mobilen Einsatz, wie z. B. in Form eines Notebooks, eines PDAs (Personal Digital Assistant) oder dergleichen, ausgebildet sein. Derartige Bedien- und Beobachtungsgeräte verfügen gleichfalls über zumindest eine Datenschnittstelle zur möglichen Übertragung anlagenbezogener Daten auf Basis eines IP-Protokolls.

Die Datenübertragung zwischen einer IP-fähigen Anlagenkomponente und einem IP-fähigen Bedien- und Beobachtungsgerät kann über ein kabelgebundenes Datennetz erfolgen. Die Datenübertragung kann alternativ oder zusätzlich funkgestützt sein. Im Falle einer kabelgebundenen Datenübertragung kann das Datennetz z. B. auf einem Ethernet-, Feldbus- oder CAN-Busstandard basieren. Die funkgestützte Datenübertragung kann z. B. auf einem WLAN-, DECT- oder GPRS/UMTS-Standard basieren. Wesentlich ist, dass die auf dem Internet-Protokoll basierende Datenübertragung unabhängig vom physikalischen Übertragungsmedium, vom Übertragungsweg und vom jeweiligen Busstandard erfolgen kann.

Bei den zwischen einer IP-fähigen Anlagenkomponente und einer weiteren IP-fähigen Anlagenkomponente übertragenen, anlagenbezogenen Betriebsdaten kann es sich um Maschinendaten der jeweiligen Anlagenkomponente handeln. Solche Daten umfassen z. B. Angaben über die Schalthäufigkeit, Unterbrechungen und Laufzeiten von Maschinen, gefertigte Stückzahlen sowie Meldungen und Störungen. Sie können weiterhin Angaben über Eingriffe bedienenden Personals, Daten der Instandhaltung, Angaben über Materialverbrauch und dergleichen umfassen.

Die Betriebsdaten können auch Prozessdaten umfassen. Letztere werden zwischen einer Anlagenkomponente und einem übergeordneten Prozess- oder Leitrechner und/oder zwischen einer Anlagenkomponente und einer weiteren Anlagenkomponente zum Steuern, Regeln und/oder Überwachen ausgetauscht. Die Prozessdaten können z. B. Prozessparameter und Konfigurationsdaten aufweisen.

Bei den Betriebsdaten kann es sich weiterhin um Bediendaten handeln, auf Basis derer benutzerseitig Bedienhandlungen an der IP-fähigen Anlagenkomponente im Sinne einer Fernwirkung vorgenommen werden können. Weiterhin können die Betriebsdaten Prozessparameter oder Konfigurationsdaten umfassen, um entsprechende Änderungen an der Anlagenkomponente vorzunehmen.

Bei den Betriebsdaten kann es sich auch um Beobachtungsdaten handeln, welche zwischen einer IP-fähigen Anlagenkomponente und einem Bedien- und Beobachtungsgerät übertragen werden. Solche Beobachtungsdaten können z. B. eine Auswahl von Prozessdaten umfassen, die zwischen einer Anlagenkomponente und einem übergeordneten Prozess- oder Leitrechner zum Steuern, Regeln und/oder Überwachen ausgetauscht werden. Die Beobachtungsdaten können Konfigurationsdaten sowie Fehler- und Statusmeldungen zu Überwachungszwecken umfassen.

Außerdem können die anlagenbezogenen Betriebsdaten Programmdaten oder Programmmodule umfassen, welche insbesondere bei einer Fernwartung der Anlagenkomponente im Sinne eines "Updates" ausgetauscht werden. Viele Anlagen und deren IP-fähigen Anlagenkomponenten sind heute bereits dazu eingerichtet, aus der Ferne gesteuert und/oder aus der Ferne gewartet zu werden. Mit "Fernwartung" versteht man in diesem Zusammenhang den Fernzugriff von technischem Personal auf die oben genannten Anlagenkomponenten zu Wartungs- und Reparaturzwecken. Mit anderen Worten sollen durch diese Maßnahmen eine möglichst lange Lebensdauer und ein möglichst geringer Verschleiß der gewarteten Anlagenkomponenten erreicht werden. Im Falle einer Reparatur soll die Anlagenkomponente bei möglichst kurzer Ausfallzeit wieder in den funktionsfähigen Zustand gebracht werden, wie z. B. mittels Ersatzkomponenten.

Möchte nun ein Anwender, wie z. B. Servicetechniker oder Monteur, mittels eines Bedien- und Beobachtungsgerätes datentechnisch über das Internet auf eine solche IP-fähige Anlagenkomponente zugreifen, um z. B. den Status einer Anlagenkomponente abzufragen und um gegebenenfalls eine Fernwartung durchzuführen, so benötigt ein Server der IP-fähigen Anlagenkomponente eine öffentliche IP-Adresse, um nach dem Client-Server-Modell über einen so genannten Client des IP-fähigen Bedien- und Beobachtungsgerätes auf diesen zugreifen zu können. Bei dem Client handelt es sich um ein Computerprogramm, welches auf einer prozessorgestützten Steuereinheit ausgeführt wird. Der Client wird typischerweise auf einer CPU, das heißt auf einem Mikroprozessor, des Bedien- und Beobachtungsgerätes ausgeführt. Für den Client selbst ist eine öffentliche IP-Adresse nicht zwingend erforderlich. So kann z. B. ein Client mit einer privaten IP-Adresse "hinter" einem NAT-Router (NAT für Network Address Translation) eine Verbindung zu einem Server mit einer öffentlichen IP-Adresse aufbauen.

Zur Ermittlung der IP-Adresse gibt es mehrere Möglichkeiten. So kann der Betreiber einer IP-fähigen Anlagenkomponente eine von einem Internet-Provider kostenpflichtige, statische IPv4-Adresse verwenden. Derartige Adressen sind aufgrund ihres kleinen Adressierungsraums allerdings knapp und teuer. Technisch gesehen ist diese IPv4-Adresse eine 32-stellige individuelle Binärzahl.

Alternativ kann der IP-fähigen Anlagenkomponente beim Verbindungsaufbau in das Internet eine öffentliche dynamische IP-Adresse von einem Internet-Provider für den Zugang ins Internet zugewiesen werden. Diese IP-Adresse kann die IP-fähige Anlagenkomponente dann zusammen mit einer URL (für Unified Ressource Locator) in einem optionalen, so genannten DynDNS-Server (DynDNS für Dynamic Domain Name Server) eines Dynamic DNS-Server-Providers speichern. Clients einer anderen IP-fähigen Anlagenkomponente oder eines IP-fähigen Bedien-und Beobachtungsgerätes können über diese URL, also über die Host-Adresse der Anlagenkomponente, auf diese zugreifen.

Eine solche dynamische IP-Adresse kann allerdings eine statische öffentliche IP-Adresse nicht ersetzen. So können offene Netzwerkverbindungen beim Offline-Gehen oder beim Wechsel der IP-Adresse "hängen" bleiben und nach einem Timeout zusammenbrechen. Es können dann innerhalb eines Zeitraums von bis zu 60 Sekunden, in dem der alte DynDNS-Hostname zwischengespeichert ist, keine Datenverbindungen mehr zu dem Host und somit zur gewünschten IP-fähigen Anlagenkomponente aufgebaut werden. Gelegentlich kommt es auch vor, dass wegen unausgereifter DynDNS-Client-Software der Hostname der IP-fähigen Anlagenkomponente über längere Zeit nicht aktualisiert wird. Dadurch kann die IP-fähige Anlagenkomponente für längere Zeit nicht mehr über das Internet erreicht werden.

Ein weiteres Problem ist, dass in der Regel alle 24 Stunden providerseitig ein Wechsel der IP-Adressen erfolgt. Nach einem solchen Wechsel muss die neue IP-Adresse erst wieder über DynDNS-Mechanismen dem DynDNS-Server des Dynamic DNS-Service-Providers bekannt gemacht werden. Auch hier erfolgt eine Unterbrechung der Datenverbindung.

Selbiger Sachverhalt trifft zu, wenn zwei oder mehrere IP-fähige Anlagenkomponenten datentechnisch über das Internet miteinander verbunden werden sollen. Die Übertragung zugehöriger anlagenbezogener Daten von einer Anlagenkomponente zu zumindest einer weiteren Anlagenkomponente kann dabei ereignis- und/oder zeitgesteuert erfolgen. So können z. B. mehrere Pegelstandsmessanlagen als Anlagenkomponente entlang eines hochwassergefährdeten Flusses angeordnet sein. Kritische Pegelstände können an die anderen Pegelstandsmessanlagen übertragen werden, um dort entsprechende wasserregulierungstechnische Maßnahmen, wie z. B. das Öffnen von Flutbecken, zu veranlassen. Problematisch ist es, wenn die adressierten anderen Pegelstandsmessanlagen aufgrund der oben genannten Umstände nicht erreichbar sein sollten.

Es ist somit eine Aufgabe der Erfindung, Verfahren anzugeben, welche eine einfachere und zuverlässigere Datenverbindung zwischen einer IP-fähigen Anlagenkomponente und einer weiteren Anlagenkomponente oder zwischen einem IP-fähigen Bedien-und Beobachtungsgerät und einer IP-fähigen Anlagenkomponente über das Internet ermöglichen.

Weiterhin ist es eine Aufgabe der Erfindung, eine geeignete Anwendung der beiden Verfahren anzugeben.

Es ist eine weitere Aufgabe, jeweils einen geeigneten Software-Client zum Ausführen auf einer prozessorgestützten Steuereinheit einer IP-fähigen Anlagenkomponente oder eines IP-fähigen Bedien- und Beobachtungsgerätes anzugeben. Dabei soll es keine Rolle spielen, welche Art von IP-Adressen, wie z. B. statische öffentliche IP-Adressen, dynamische öffentliche IP-Adressen oder private IP-Adressen, die IP-fähige Anlagenkomponente oder das IP-fähige Bedien- und Beobachtungsgerät vom Internet-Provider erhalten hat.

Zudem ist es eine Aufgabe der Erfindung, ein Gateway mit einem derartigen ersten Software-Client für eine Anlagenkomponente sowie eine IP-fähige Anlagenkomponente mit einem solchen Gateway anzugeben.

Schließlich ist es eine Aufgabe der Erfindung, ein Bedien-und Beobachtungsgerät mit einem derartigen zweiten Software-Client anzugeben.

Die Aufgabe wird jeweils durch ein Verfahren mit den Merkmalen des Patentanspruchs 1 und 3 gelöst. In den Ansprüchen 2 und 4 sind vorteilhafte Verfahrensvarianten angegeben. Im Anspruch 5 ist eine vorteilhafte Verwendung der beiden Verfahren angegeben. Im Anspruch 6 sind ein erster Software-Client, im Anspruch 7 ein zweiter Software-Client und im Anspruch 8 eine vorteilhafte Variante der beiden Clients genannt. Im Anspruch 9 ist ein Datenspeichermedium mit einem gespeicherten derartigen Software-Client angegeben. Im Anspruch 10 ist ein Gateway mit einem ersten Software-Client für eine IP-fähige Anlagenkomponente und im Anspruch 11 eine IP-fähige Anlagenkomponente mit einem integrierten derartigen Gateway genannt. Im Anspruch 12 ist eine vorteilhafte Ausführungsform der IP-fähigen Anlagenkomponente angegeben. Schließlich ist im Anspruch 13 ein Bedien- und Beobachtungsgerät mit einem zweiten Software-Client angegeben, der auf einer dortigen prozessorgestützten Steuereinheit ausführbar ist.

Kernidee der Erfindung ist die Verwendung einer VoIP-Technologie (VoIP für Voice over IP) und deren Infrastruktur zum Aufbau einer IP-Telefonverbindung und zum Aushandeln einer P2P-Datenverbindung (P2P für Peer-to-Peer) zwischen "Anrufer" und "Angerufenen", wobei nun anlagenbezogene Betriebsdaten anstelle der Audio- und Videodaten über die ausgehandelte P2P-Datenverbindung übertragen werden. Im Vergleich zur Übertragung der Audio- und Videodaten besteht bei der Übertragung der anlagenbezogenen Daten kein Echtzeiterfordernis.

Mit "anstelle" ist gemeint, dass der Großteil der in einer P2P-Datenverbindung übertragenen Nutzdaten, das heißt mindestens 90 % der Nutzdaten, für die Übertragung der anlagenbezogenen Betriebsdaten verwendet wird.

Der Clou hierbei ist, dass es überhaupt nicht zu einem Telefonat zwischen Personen kommt. Es werden vielmehr nur die Mechanismen zum Verbindungsaufbau der VoIP-Technologie genutzt, um, wie bei einem Telefonat, eine IP-fähige Anlagenkomponente mit einer weiteren IP-fähigen Anlagenkomponente bzw. ein IPfähiges Bedien- und Beobachtungsgerät mit einer IP-fähigen Anlagenkomponente einfach, schnell und zuverlässig über das Internet zu verbinden.

Mit "VoIP" versteht man üblicherweise das Telefonieren über ein Computernetzwerk, wie z. B. über das Internet oder ein firmeninternes Intranet. Anstelle des Begriffs VoIP wird häufiger auch der Begriff IP-Telefonie verwendet. Zum Telefonieren ist es erforderlich, dass zumindest zwei zur Sprachdatenübertragung verbundene Computer oder PCs je ein Mikrofon und einen Lautsprecher aufweisen. Neben der Übertragung der Sprache können auch Videodaten im Sinne eines Bild- oder Videotelefons übertragen werden. Die Audio- und Videodaten werden dabei "gestreamt", das heißt, sie werden in einem kontinuierlichen Datenstrom übertragen. Anbieter solcher VoIP-Dienste sind z. B. sipgate.com, voiptalk.org oder dus.net.

Erfindungsgemäß werden bei dem ersten Verfahren zuerst die IP-fähigen Anlagenkomponenten bei einem VoIP-Provider als VoIP-Teilnehmer im Sinne einer Anmeldung eines Telefonkunden bei einer Telefongesellschaft angemeldet. Die Anmeldung kann z. B. durch eine Person, wie z. B. durch einen Anwender, erfolgen. Sie kann alternativ auch automatisiert erfolgen, wenn entsprechende Anmeldeautomatismen auf Seiten der Anbieter (Provider) von VoIP-Diensten verfügbar sein sollten. Der Provider teilt daraufhin dem Anmelder bzw. Anwender eine VoIP-Teilnehmerkennung mit, wie z. B. 12345@sip-server.de. Zusätzlich kann dem Anmelder noch eine Benutzerkennung und gegebenenfalls ein Kennwort zugeteilt werden. Dieser Prozess erfolgt typischerweise online. Der Provider erhält zudem eine VoIP-Teilnehmerkennung, das heißt eine Teilnehmeradresse im Sinne einer Telefonnummer, unter welcher der Anmelder über den jeweiligen Dienst erreicht werden kann. Zum Teil kann der Anmelder eigene Vorschläge für eine VoIP-Teilnehmerkennung machen, welche dann vom Provider geprüft und als solche dann dem Anmelder zugewiesen wird.

Handelt es sich bei der Teilnehmerkennung um eine standardisierte SIP-Adresse (SIP für Session Initiation Protocol), so kann über diese die aktuelle IP-Adresse ermittelt werden. Derartige SIP-Adressen sind im Vergleich zu Telefonnummern nicht an einen Anschluss gebunden, sondern wie E-Mail-Konten von jedem Internet-Anschluss aus weltweit nutzbar. Zum Erhalt einer SIP-Adresse im so genannten URI-Format (für Uniform Ressource Identifier), wie z. B. 12345@sip-server.de, kann sich der Anwender bei einem der vielen freien oder kostenpflichtigen Providern anmelden.

Im Anschluss werden gemäß der Erfindung die jeweiligen Software-Clients der IP-fähigen Anlagenkomponenten mit der jeweils vom Provider zugewiesenen bzw. eingerichteten eigenen VoIP-Teilnehmerkennung und mit den jeweils zugewiesenen VoIP-Teilnehmerkennungen der jeweils weiteren IP-fähigen Anlagenkomponenten parametriert. Zudem werden die Software-Clients mit einer Host-Adresse (URL) parametriert, also mit einer Webadresse, über die ein VoIP-Proxy-Server des Providers über das Internet lokalisiert werden kann. Üblicherweise verfügt ein VoIP-Provider über eine Vielzahl derartiger Proxy-Server.

Nach dem Starten, das heißt üblicherweise beim Einschalten, registrieren sich gemäß der Erfindung die jeweiligen Clients beim Proxy-Server mit der eigenen VoIP-Teilnehmerkennung. Dadurch wird dem Proxy-Server bzw. dem Provider eine Rufbereitschaft zum möglichen Anrufen des registrierten Clients bzw. der IP-fähigen Anlagenkomponente über das Internet signalisiert.

Die VoIP-Teilnehmerkennungen der weiteren IP-fähigen Anlagenkomponenten müssen nicht notwendigerweise im jeweiligen Client gespeichert sein. Ein Client benötigt zunächst seine eigene VoIP-Teilnehmerkennung, damit er sich beim VoIP-Proxy-Server registrieren kann. Er kann daraufhin von einem anderen VoIP-Teilnehmer "angerufen" werden. Die VoIP-Teilnehmerkennungen der weiteren IP-fähigen Anlagenkomponenten werden erst dann benötigt, wenn der jeweilige Client selbst einen anderen Client anrufen möchte. Die VoIP-Teilnehmerkennungen können z. B. auch außerhalb des Clients in der Anlagenkomponente gespeichert sein.

Gemäß der Erfindung wird im Falle eines Ereignisses, wie z. B. bei Vorliegen einer Fehlermeldung in einer Anlagenkomponente, oder zeitgesteuert, wie z. B. täglich, eine Rufaufbau-Datenverbindung zum Proxy-Server durch einen jeweiligen Client gestartet. Diese Rufaufbau-Datenverbindung erfolgt auf Basis eines Signalisierungsprotokolls. Mittels eines solchen Netzprotokolls werden der Aufbau, die Steuerung und der Abbau von VoIP-Telefonrufen gesteuert, und zwar getrennt von der bisher verwendeten Sprachübertragung. Auch werden über das Signalisierungsprotokoll die Parameter für die bisher verwendete Sprachübertragung und gegebenenfalls Videoübertragung ausgehandelt, wie z. B. die Art der zu verwendenden Codecs. Verbreitete Signalisierungsprotokolle sind z. B. das H.323- oder IAX-Protokoll. Vorzugsweise wird ein standardisiertes SIP-Protokoll verwendet. Mit dem Starten der Rufaufbau-Datenverbindung wird auch die Teilnehmerkennung einer ausgewählten weiteren IP-fähigen Anlagenkomponente zum Proxy-Server übertragen.

Ist die Rufaufbau-Phase abgeschlossen, erfolgt gemäß der Erfindung der Aufbau einer Peer-to-Peer-Datenverbindung zwischen dem Client der IP-fähigen Anlagenkomponente und der ausgewählten weiteren IP-fähigen Anlagenkomponente, und zwar auf Basis jeweils einer vom Proxy-Server ermittelten sowie den beiden Clients mitgeteilten IP-Adresse. Mit anderen Worten erfolgt nun parallel zu der begleitenden Rufaufbau-Datenverbindung eine weitere Datenverbindung. Verfügen beide Clients jeweils über eine öffentliche IP-Adresse, so können beide Clients über diese P2P-Datenverbindung direkt und ohne einen weiteren zwischengeschalteten Server Daten austauschen. Ein zwischengeschalteter Server ist z. B. dann erforderlich, wenn einer der beiden Clients über eine private IP-Adresse mit dem Internet verbunden ist. Dies ist z. B. bei Clients der Fall, die über Mobilfunk in das Internet "gehen".

Über diese ausgehandelte Peer-to-Peer-Datenverbindung erfolgt nun anstelle der bisher üblichen Übertragung von Audio- und Videodaten die Übertragung von anlagenbezogenen Betriebsdaten. Bei der Übertragung der anlagenbezogenen Betriebsdaten fällt prinzipiell auch das Echtzeiterfordernis weg, wie z. B. die Übertragung mittels eines häufig verwendeten "Real-Time Transport Protocols" (RTP).

Schließlich erfolgt am Ende der Datenübertragung gemäß der Erfindung der Abbau der Peer-to-Peer-Datenverbindung, gesteuert durch das Signalisierungsprotokoll. Der Abbau einer Peer-to-Peer-Datenverbindung umfasst auch den Fall des nicht gewollten Abbruchs dieser Datenverbindung.

Der besondere Vorteil dieses Verfahrens ist, dass mehrere IP-fähige Anlagenkomponenten bedarfsweise, das heißt ereignis-oder zeitgesteuert, untereinander Betriebsdaten in Form eines Telefonanrufs austauschen können. Die jeweiligen VoIP-Teilnehmerkennungen können als elektronisches Telefonbuch in der Anlagenkomponente gespeichert sein, sodass auch eine einfache Adressierung des gewünschten Gesprächteilnehmers möglich ist.

Ein weiterer großer Vorteil ist, dass die Kenntnis der IP-Adresse der jeweiligen Gegenstelle, die sich dynamisch ändern kann und nicht aktualisiert sein kann, nicht erforderlich ist. Hier stellen die VoIP-Adressierungsmechanismen über den VoIP-Proxy-Server sicher, dass, wie beim Telefonieren auch, eine zuverlässige Verbindung über die eindeutige VoIP-Teilnehmerkennung zustande kommt.

Nach einer vorteilhaften Verfahrensvariante wird eine stationäre oder mobile Rechnereinheit als weitere IP-fähige Anlagenkomponente zum Empfangen und Visualisieren der anlagenbezogenen Betriebsdaten verwendet. Die Rechnereinheit kann z. B. ein Desktop-PC, ein Notebook, ein PDA oder ein Smart Phone sein. Dadurch können z. B. Fehlermeldungen auf einen mobilen PDA eines Servicetechnikers übermittelt und angezeigt werden.

Die Aufgabe wird erfindungsgemäß für das zweite Verfahren zum Bedienen, Beobachten und Fernwarten zumindest einer IP-fähigen Anlagenkomponente mittels eines IP-fähigen Bedien- und Beobachtungsgerätes über das Internet in ähnlicher Weise gelöst.

Hier ist zusätzlich eine Anmeldung eines Bedien- und Beobachtungsgerätes beim VoIP-Provider erforderlich. Es werden in diesem Fall anlagenbezogene Betriebsdaten zwischen dem Bedien- und Beobachtungsgerät und einer anwenderseitig ausgewählten IP-fähigen Anlagenkomponente übertragen. Die Auswahl kann z. B. über eine Applikation auf dem Bedien- und Beobachtungsgerät erfolgen, welche von einer Steuereinheit des Bedien- und Beobachtungsgerätes ausgeführt wird und welche eine Auswahl von aktuell sich registrierten IP-fähigen Anlagenkomponenten anbietet. Anstelle des herkömmlichen Zugriffs auf einen Webserver der ausgewählten jeweiligen IP-fähigen Anlagenkomponente wird diese nun zuerst über den Software-Client des Bedien- und Beobachtungsgerätes angerufen. Steht im Anschluss die Peer-to-Peer-Datenverbindung zwischen der ausgewählten IP-fähigen Anlagenkomponente und dem anrufenden Bedien- und Beobachtungsgerät, so ist ein beidseitiger, gleichberechtigter Zugriff im Vergleich zum herkömmlichen, einseitigen Client-Server-Zugriff möglich. Über die Peer-to-Peer-Datenverbindung ist ein Bedienen und Fernwarten bzw. ein Fernwirkeingriff auf die IP-fähige Anlagenkomponente möglich, wie z. B. mittels einer geeigneten Bedienoberfläche. Die Visualisierung der Betriebsdaten kann auf derselben Bedienoberfläche erfolgen.

Auch hier liegt der Vorteil für den Anwender darin, dass er sich hinsichtlich des Verbindungsaufbaus zur jeweiligen IP-fähigen Anlagenkomponente "keine Gedanken machen" muss. Hier genügt wiederum die weltweit eindeutige VoIP-Teilnehmerkennung.

Nach einer besonders vorteilhaften Verfahrensvariante werden die anlagenbezogenen Betriebsdaten verschlüsselt übertragen. Dadurch wird vorteilhaft ein unbefugter Zugriff auf die jeweilige IP-fähige Anlagenkomponente sowie ein Auslesen von Daten verhindert. Durch die Verschlüsselung ist zudem der Aufbau eines gesicherten VPN, das heißt eines Virtual Privat Networks, möglich.

Die beiden erfindungsgemäßen Verfahren können besonders vorteilhaft in der Anlagen-, Fertigungs- oder Automatisierungstechnik, mit anderen Worten im Automatisierungskontext, angewendet werden.

Die Aufgabe der Erfindung wird weiterhin mit einem ersten Software-Client zum Ausführen auf einer prozessorgestützten Steuereinheit eines VoIP-Gateways gelöst. Das VoIP-Gateway ist mit zumindest einer herkömmlichen, das heißt nicht notwendigerweise IP-fähigen, Anlagenkomponente innerhalb derselben Anlage und mit dem Internet datentechnisch verbunden. Weiterhin weist der Software-Client zum Durchführen der nachfolgend beschriebenen Verfahrensschritte entsprechende, auf der Steuereinheit des Gateways ausführbare Programmschritte auf. Allgemein handelt es sich bei dem Software-Client um ein Computerprogramm, welches in der Softwarehierarchie oberhalb des Kommunikationsstacks aufgesetzt ist, wobei letzterer selbst auf der Betriebssystemebene aufgesetzt ist. Zur Parametrierung bzw. Initialisierung steht der Software-Client mit einer übergeordneten Applikation in Verbindung.

Erfindungsgemäß wird der Client beim Start mit einer eigenen VoIP-Teilnehmerkennung eines VoIP-Providers, mit VoIP-Teilnehmerkennungen weiterer IP-fähiger Anlagenkomponenten und mit einer Host-Adresse zum Lokalisieren eines VoIP-Proxy-Servers des Providers über das Internet parametriert.

Die weiteren IP-fähigen Anlagenkomponenten liegen typischerweise weit entfernt zum Gateway der zumindest einen Anlagenkomponente. Die zugehörigen Daten bzw. Parameter können z. B. in einer über den Client zugreifbaren Datei gespeichert sein.

Gemäß der Erfindung registriert sich weiterhin der Client vorzugsweise automatisch beim Proxy-Server mit der eigenen VoIP-Teilnehmerkennung. Mit anderen Worten wählt sich der Client beim Proxy-Server ein und signalisiert so diesem seine Rufbereitschaft. Anschließend wartet der Client, bis ein Ereignis vorliegt oder bis eine zyklische Wartezeit abgelaufen ist, um dann eine Rufaufbau-Datenverbindung zum Proxy-Server auf Basis eines Signalisierungsprotokolls zu starten. Dabei übermittelt der Client die VoIP-Teilnehmerkennung einer ausgewählten IP-fähigen Anlagenkomponente.

Im Anschluss wartet der Client auf die Mitteilung einer öffentlichen IP-Adresse durch den Proxy-Server, über welche der Client der weiteren IP-fähigen Anlagenkomponente über das Internet erreicht werden kann.

Die IP-Adressen werden dabei den Clients nicht durch den VoIP-Proxy-Server, sondern durch einen (IP-)Server des Internet-Providers zugewiesen. Vielmehr "kennt" der VoIP-Proxy-Server selbst nur die IP-Adressen der Clients, die sich dort unter Angabe ihrer VoIP-Teilnehmerkennung registriert haben und hierbei ihre vom IP-Server aktuell zugewiesene IP-Adresse mit übertragen haben. Mit anderen Worten teilt der VoIP-Proxy-Server einem anrufenden Client die IP-Adresse des angerufenen Clients mit.

Danach startet der Client der IP-fähigen Anlagenkomponente den Aufbau einer Peer-to-Peer-Datenverbindung zum Client der ausgewählten weiteren Anlagenkomponente.

Anschließend werden die anlagenbezogenen Betriebsdaten zwischen den beiden Clients über diese Peer-to-Peer-Datenverbindung übertragen. Ob, in welche Richtung und welche Daten übertragen werden, legt eine übergeordnete Applikation fest, welche entsprechende Anlagendaten dem Client bereitstellt bzw. welche die Applikation von ihm anfordert. Nach Übertragung der Daten fordert der Client oder der jeweils andere Client einen Abbau der Peer-to-Peer-Datenverbindung an.

In entsprechender Weise wird die Aufgabe der Erfindung durch einen zweiten Software-Client gelöst, welcher auf einer prozessorgestützten Steuereinheit eines IP-fähigen Bedien- und Beobachtungsgerätes ausgeführt wird. Anstelle des Startens einer ereignis- und zeitgesteuerten Rufaufbau-Datenverbindung wartet der Client des Bedien- und Beobachtungsgerätes auf eine anwenderseitige Anforderung aus einer übergeordneten Bedienoberfläche heraus.

Nach einer Ausführungsform weist der Software-Client Programmroutinen zum verschlüsselten Übertragen der anlagenbezogenen Betriebsdaten auf. Hierzu kann der Client programmtechnisch auf Programmstrukturen mit einem Verschlüsselungs- und Entschlüsselungs-Algorithmus zugreifen oder diese im Sinne eines Plugins einbinden.

Weiterhin wird die Aufgabe der Erfindung durch ein Datenspeichermedium mit einem in maschinenlesbarer Form gespeicherten erfindungsgemäßen Software-Client gelöst. Das Datenspeichermedium kann z. B. eine Diskette, eine Compact Disk (CD) oder eine Digital Versatile Disk (DVD) sein. Alternativ dazu kann das Datenspeichermedium eine kompakte elektronische Speicherkarte, insbesondere eine MM-Card, eine SD-Card oder CF-Card, oder ein USB-Stick sein. Über geeignete Lesegeräte kann der jeweilige Client dann in den Arbeitsspeicher der jeweiligen Steuereinheit eingelesen werden.

Die Aufgabe der Erfindung wird weiterhin durch ein VoIP-Gateway für zumindest eine Anlagenkomponente innerhalb derselben Anlage vor Ort gelöst. Ein solches Gateway kann ein eigenständiges Gerät oder ein Modul sein. Es weist einerseits eine erste Datenschnittstelle zum Austausch von Anlagendaten mit einer oder mehreren Anlagensteuerungen von einer oder mehreren (herkömmlichen) Anlagenkomponenten auf. Hierzu kann das VoIP-Gateway einen oder mehrere Busanschlüsse aufweisen. Sind mehrere Anlagensteuerungen vorhanden, so können diese z. B. über einen Profibus oder CAN-Bus gemeinsam an die erste Datenschnittstelle angeschaltet sein. Die Datenübertragung zwischen der ersten Datenschnittstelle und den Anlagensteuerungen kann prinzipiell auf einem beliebigen Datenprotokoll basieren.

Weiterhin weist das VoIP-Gateway eine zweite Datenschnittstelle zum Austausch von anlagenbezogenen Betriebsdaten über das Internet auf. Weiterhin weist das VoIP-Gateway eine prozessorgestützte Steuereinheit zum Ausführen von Programmschritten eines Computerprogramms auf, um die Daten zwischen der ersten und zweiten Datenschnittstelle umzusetzen. Das VoIP-Gateway ist dazu vorgesehen, die zuvor genannten Daten hinsichtlich der den Datenschnittstellen zugrunde liegenden Bussysteme und/oder hinsichtlich der verwendeten physikalischen Übertragungsmedien und/oder hinsichtlich der verwendeten Übertragungsprotokolle umzusetzen.

Erfindungsgemäß weist das VoIP-Gateway einen auf der Steuereinheit ausführbaren, zuvor beschriebenen ersten Software-Client auf, um anlagenbezogene Betriebsdaten mit einer ausgewählten weiteren IP-fähigen Anlagenkomponente und/oder mit einem IP-fähigen Bedien- und Beobachtungsgerät jeweils über eine von einem VoIP-Proxy-Server vermittelte Peer-to-Peer-Datenverbindung auszutauschen.

Das VoIP-Gateway kann zum Anschluss an die Anlagensteuerungen der Anlagenkomponenten eine beliebige Schnittstelle als erste Datenschnittstelle aufweisen. Sie kann zum Anschluss an das Internet eine drahtgebundene LAN-, DSL-, ISDN- oder Modem-Schnittstelle oder eine funkgestützte WLAN-, DECT-, GPRS-oder UMTS-Schnittstelle als zweite Datenschnittstelle aufweisen. Grundsätzlich können die zuvor genannten Bus- und Datenübertragungssysteme dazu ausgebildet sein, Internet-Protokolle, wie Netzprotokolle oder Transportprotokolle, zu unterstützen.

Weiterhin wird die Aufgabe gelöst durch eine IP-fähige Anlagenkomponente, welche ein integriertes derartiges VoIP-Gateway aufweist. In diesem Fall kann die Schnittstelleneinheit als Einsteckkarte zum Einstecken in einen Steckplatz einer Anlagensteuerung der Anlagenkomponente ausgeführt sein. Nach einer Ausführungsform ist eine solche IP-fähige Anlagenkomponente Teil einer technischen Anlage. Sie kann alternativ ein Fertigungsgerät, ein Automatisierungsgerät, eine Maschine oder eine Fernwirkkomponente oder dergleichen sein.

Schließlich wird die Aufgabe der Erfindung durch ein Bedien-und Beobachtungsgerät gelöst, welches einen auf der Steuereinheit des Bedien- und Beobachtungsgerätes ausführbaren zweiten Software-Client zur Datenübertragung von anlagenbezogenen Betriebsdaten mit einer anwenderseitig auswählbaren IP-fähigen Anlagenkomponente über eine von einem VoIP-Proxy-Server vermittelte Peer-to-Peer-Datenverbindung aufweist.

Der besondere Vorteil ist, dass mittels eines derartigen Gerätes von einer weltweit beliebigen Stelle mit Internet-Zugang aus auf denkbar einfache Weise unter Nutzung einer VoIP-Teilnehmerkennung auf die ausgewählte Anlagenkomponente zugegriffen werden kann, unabhängig von der zugrunde liegenden Übertragungstechnologie und unabhängig vom Übertragungsweg. Wegen der hohen Anforderung für die Verbindungssicherheit bei der Sprach- und Videoübertragung ist die mittels der VoIP-Mechanismen vermittelte Peer-to-Peer-Datenverbindung besonders zuverlässig. Unterbrechungen und Ausfälle aufgrund von DynDNS-Mechanismen bei einer herkömmlichen Datenverbindung werden vorteilhaft vermieden.

Die Erfindung sowie vorteilhafte Ausführungen der Erfindung werden im Weiteren anhand der nachfolgenden Figuren näher beschrieben. Es zeigen:
- FIG 1: ein Ablaufdiagramm zur Verdeutlichung der Schritte beim ersten erfindungsgemäßen Verfahren,
- FIG 2: ein Ablaufdiagramm zur Verdeutlichung der Schritte beim zweiten erfindungsgemäßen Verfahren,
- FIG 3: ein Beispiel möglicher vermittelter Peer-to-Peer- Datenverbindungen zwischen IP-fähigen Anlagenkompo- nenten über das Internet gemäß der Erfindung,
- FIG 4: ein Beispiel möglicher vermittelter Peer-to-Peer- Datenverbindungen zwischen IP-fähigen Anlagenkompo- nenten und IP-fähigen Bedien- und Beobachtungs- geräten über das Internet gemäß der Erfindung,
- FIG 5: eine hierarchische Softwarestruktur eines beispiel- haften erfindungsgemäßen Gateways und
- FIG 6: eine hierarchische Softwarestruktur eines beispiel- haften erfindungsgemäßen Bedien- und Beobachtungs- gerätes.

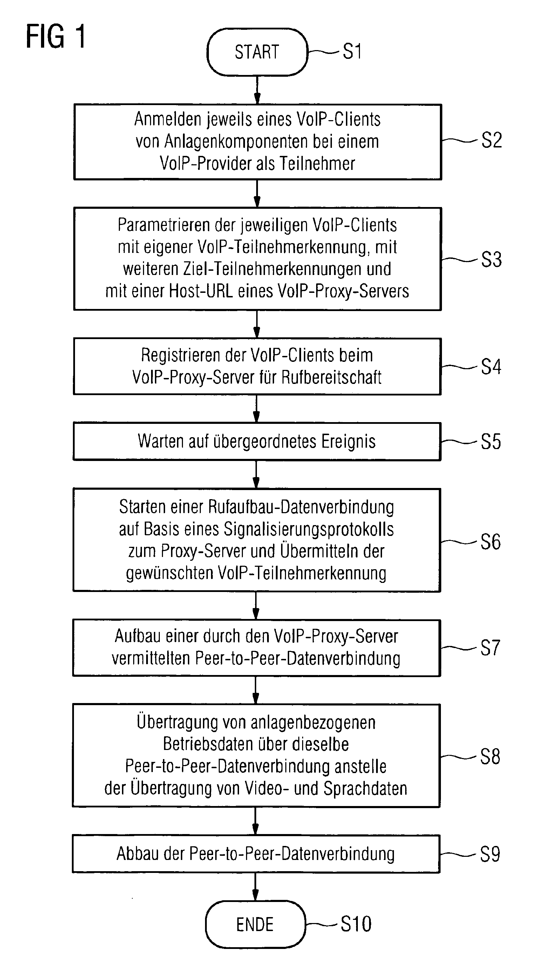

FIG 1 zeigt ein Ablaufdiagramm zur Verdeutlichung der Schritte S1-S10 beim ersten erfindungsgemäßen Verfahren, welches zum Übertragen anlagenbezogener Betriebsdaten zwischen IP-fähigen Anlagenkomponenten über das Internet N vorgesehen ist.

Mit S1 ist ein Startschritt bezeichnet.

Im folgenden Schritt S2 werden die IP-fähigen Anlagenkomponenten bei einem VoIP-Provider angemeldet. Diese sind dann als VoIP-Teilnehmer bei diesem registriert.

Im Schritt S3 werden die Software-VoIP-Clients jeweils mit einer vom Provider zugewiesenen eigenen VoIP-Teilnehmerkennung parametriert. Weiterhin werden die Clients mit VoIP-Teilnehmerkennungen (Ziel-Teilnehmerkennungen) der jeweils weiteren IP-fähigen Anlagenkomponenten und mit einer Host-Adresse parametriert, um einen VoIP-Proxy-Server des Providers über das Internet lokalisieren zu können.

Im folgenden Schritt S4 registrieren sich die Clients beim Proxy-Server mit ihrer eigenen VoIP-Teilnehmerkennung, um ihre Rufbereitschaft über das Internet zu signalisieren. Üblicherweise erfolgt diese Registrierung nach dem Starten der jeweiligen IP-fähigen Anlagenkomponente automatisch.

Im anschließenden Schritt S5 wartet der jeweilige VoIP-Software-Client auf ein übergeordnetes Ereignis, wie z. B. auf das Vorliegen eines technischen Fehlers. Ein solches Ereignis empfängt der Client dann von einer übergeordneten Applikation, welche z. B. Überwachungsfunktionen ausführen kann und welche mit dem Client kommunizieren kann. Alternativ oder zusätzlich kann der Client zeitgesteuert getriggert werden.

In solchen Fällen startet der jeweilige Client im Schritt S6 eine Rufaufbau-Datenverbindung zum Proxy-Server auf Basis eines Signalisierungsprotokolls, insbesondere auf Basis eines standardisierten SIP-Protokolls. Hierzu übermittelt der jeweilige Client die Teilnehmerkennung URI einer ausgewählten weiteren IP-fähigen Anlagenkomponente, die er "anrufen" möchte. Für den Fall, dass sich der angerufene andere VoIP-Teilnehmer gleichfalls registriert hat, also seine Rufbereitschaft beim VoIP-Proxy-Server signalisiert hat, teilt der VoIP-Proxy-Server den Clients jeweils eine öffentliche IP-Adresse mit, über welche der jeweils andere Client bzw. die jeweils andere IP-fähige Anlagenkomponente über das Internet aktuell erreichbar ist.

Im Schritt S7 erfolgt der Aufbau der eigentlichen Peer-to-Peer-Datenverbindung zwischen den beiden Clients, während die typischerweise davon getrennte Rufaufbau-Datenverbindung weiterhin zur Steuerung der Peer-to-Peer-Datenverbindung bestehen bleibt.

Im Schritt S8 erfolgt nun anstelle der Übertragung von VoIP-Audio- und Videodaten die Übertragung der anlagenbezogenen Betriebsdaten zwischen den Clients, und zwar genau über diese P2P-Datenverbindung.

Nach Beendigung der Datenübertragung erfolgt im Schritt S9 der Abbau der P2P-Datenverbindung, gesteuert über die begleitende Rufaufbau-Datenverbindung auf Basis des Signalisierungsprotokolls.

Mit S10 ist schließlich ein Endschritt bezeichnet.

Ergänzend wird bemerkt, dass die weitere IP-fähige Anlagenkomponente eine stationäre oder mobile Rechnereinheit sein kann, wie z. B. ein Notebook. Die anlagenbezogenen Betriebsdaten können von dieser Rechnereinheit empfangen und dargestellt werden. Vorzugsweise werden diese Daten verschlüsselt übertragen.

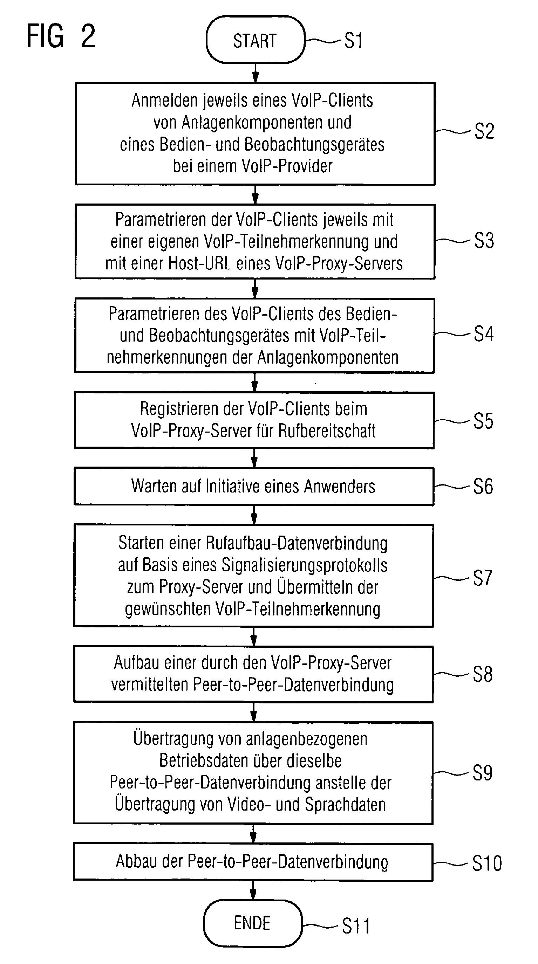

FIG 2 zeigt ein Ablaufdiagramm zur Verdeutlichung der Schritte S1-S11 beim zweiten erfindungsgemäßen Verfahren.

Im Vergleich zum Ablaufdiagramm gemäß FIG 1 werden im Schritt S2 die Clients von IP-fähigen Anlagenkomponenten und die eines Bedien- und Beobachtungsgerätes bei einem VoIP-Provider angemeldet. Im Schritt S3 werden die Software-Clients jeweils mit einer eigenen VoIP-Teilnehmerkennung und mit einer Host-URL eines VoIP-Proxy-Servers parametriert, während im Schritt S4 vorzugsweise nur der VoIP-Client des Bedien- und Beobachtungsgerätes mit VoIP-Teilnehmerkennungen der Anlagenkomponenten parametriert wird. Im Schritt S6 wartet der Client des Bedien- und Beobachtungsgerätes auf eine anwenderseitige Initiative, um dann die Rufaufbau-Datenverbindung zum Proxy-Server zu starten.

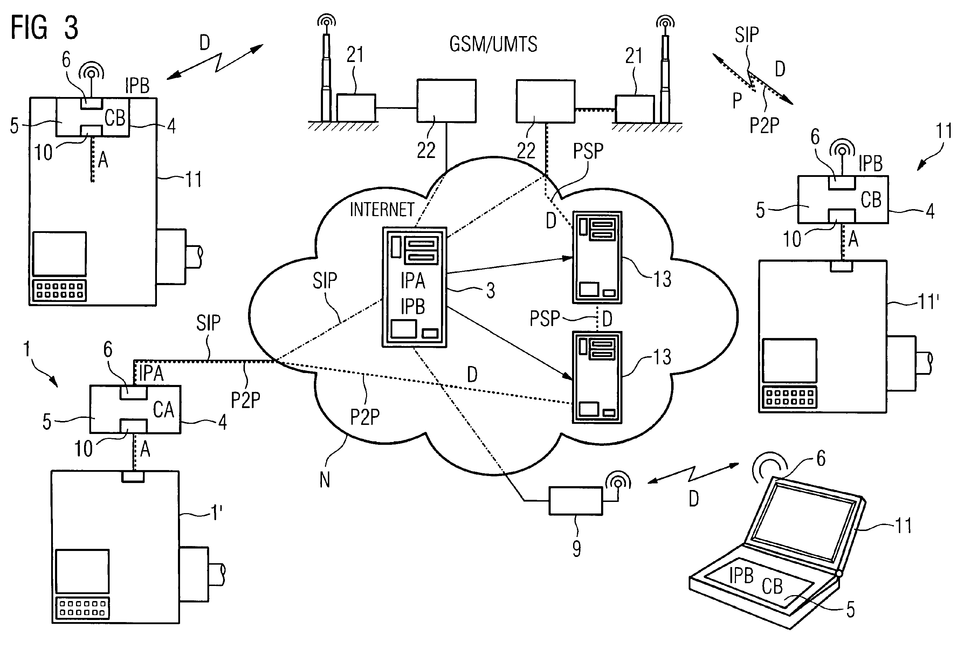

FIG 3 zeigt ein Beispiel möglicher vermittelter Peer-to-Peer-Datenverbindungen P2P zwischen IP-fähigen Anlagenkomponenten 1, 11 über das Internet N gemäß der Erfindung.

In der Bildmitte ist das Internet N, symbolisiert durch eine Wolke, dargestellt. Mit dem Internet N sind eine IP-fähige Anlagenkomponente 1 und zwei weitere IP-fähige Anlagenkomponenten 11 verbunden, jeweils dargestellt als eine Maschine.

Weiterhin ist ein Notebook als weitere IP-fähige Anlagenkomponente 11 an das Internet N angeschlossen. Die Anlagenkomponente 1 im linken unteren Teil der FIG 3 ist mit dem Internet N über ein Kabel verbunden, wie z. B. über eine LAN-Verbindung innerhalb eines Automatisierungskomplexes. Die beiden oben links und rechts dargestellten weiteren Anlagenkomponenten 11 sind über eine drahtlose GSM/UMTS-Datenfunkverbindung, symbolisiert durch ein Blitzsymbol, mit dem Internet N verbunden. Mit dem Bezugszeichen 21 ist ein Mobilfunksendesystem und mit 22 ein zugehöriges Verteilungsteilsystem bezeichnet, über welche die Betriebsdaten D zwischen den Anlagenkomponenten 11 und dem Internet N transportiert werden. Das unten rechts gezeigte Notebook ist als weitere IP-fähige Anlagenkomponente 11 über eine WLAN-Verbindung an das Internet N angeschlossen. Mit dem Bezugszeichen 9 ist ein zugehöriges DSL/WLAN-Modem bezeichnet, welches an eine Telefonleitung eines Telekommunikationsunternehmens in bekannter Weise angeschlossen ist.

Im vorliegenden Beispiel soll nun zum möglichen Austausch der Betriebsdaten D eine Internet-Datenverbindung zwischen der IP-fähigen Anlagenkomponente 1 im linken unteren Teil der FIG 3 und der rechts oben dargestellten weiteren IP-fähigen Anlagenkomponente 11 hergestellt werden.

Erfindungsgemäß weisen die beiden Anlagenkomponenten 1, 11 hierzu jeweils einen ersten Software-Client CA, CB auf, der jeweils auf einer prozessorgestützten Steuereinheit 5, insbesondere auf einem Mikroprozessor der jeweiligen IP-fähigen Anlagenkomponente 1, 11 ausgeführt wird. Im vorliegenden Beispiel ist die Steuereinheit 5 Teil eines eigenständigen Gateways 4, also eines eigenständigen Gerätes, welches zum einen über eine erste Datenschnittstelle 6 mit dem Internet N und über eine zweite Datenschnittstelle 10 mit einer herkömmlichen Anlagenkomponenten 1', 11' datentechnisch verbunden ist. Mit A sind Anlagendaten bezeichnet, die von diesen nicht IP-fähigen Anlagenkomponenten 1', 11' stammen. Diese bilden die Quelle für die zu übertragenden Betriebsdaten D.

Dagegen ist die Funktionalität des Gateways 4 bei der links oben dargestellten IP-fähigen Anlagenkomponente 11 in dieser selbst integriert, wie z. B. durch eine Einsteckkarte. Auch kann der erste Client CB auf einer für die Steuerung der weiteren Anlagenkomponente 11 bereits vorgesehenen Steuereinheit 5 mit ausgeführt werden.

Die beiden Clients CA, CB werden gemäß der Erfindung beim Starten bzw. Einschalten der jeweiligen Anlagenkomponente 1, 11 jeweils mit einer eigenen VoIP-Teilnehmerkennung eines VoIP-Providers parametriert, bei denen die beiden Clients CA, CB zuvor angemeldet worden sind. Sie werden weiterhin mit einer oder mehreren VoIP-Teilnehmerkennungen weiterer IP-fähiger Anlagenkomponenten 1, 11 und mit einer Host-Adresse parametriert, um einen zum VoIP-Provider gehörenden VoIP-Proxy-Server 3 über das Internet N zu lokalisieren. Dabei muss es sich nicht um denselben Provider handeln. Wesentlich ist hier, dass die VoIP-Teilnehmer über ihre jeweilige Teilnehmerkennung über das Internet N erreicht werden können.

Im Anschluss registrieren bzw. wählen sich die beiden Clients CA, CB automatisch beim zugehörigen Proxy-Server 3 mit ihrer eigenen VoIP-Teilnehmerkennung ein. Die beiden IP-fähigen Anlagenkomponenten 1, 11 sind nun in Rufbereitschaft und beim jeweiligen Provider als "online" registriert.

Für den Fall eines mitteilungsbedürftigen Ereignisses, wie z. B. bei Vorliegen eines technischen Fehlers in der IP-fähigen Anlagenkomponente 1, startet der VoIP-Client CA automatisch eine Rufaufbau-Datenverbindung SIP zum Proxy-Server 3. Diese Datenverbindung SIP basiert vorzugsweise auf dem standardisierten SIP-Protokoll. Über diese überträgt der Client CA die VoIP-Teilnehmerkennung der ausgewählten Anlagenkomponente 11. Hierzu kann in einer übergeordneten Überwachungsapplikation der IP-fähigen Anlagenkomponente 1 bzw. des Gateways 4 festgelegt sein, welche weitere IP-fähige Anlagenkomponente 11 bei welchem Ereignis "angerufen" werden soll.

Der Proxy-Server 3 teilt hierauf dem anrufenden und dem angerufenen VoIP-Teilnehmer, das heißt den Clients CA, CB, eine jeweilige öffentliche IP-Adresse IPA, IPB mit, über welche der jeweils andere Client CA, CB aktuell über das Internet N erreicht werden kann.

Nach Abschluss der Rufaufbauphase greift nun der Client CA über die vom Proxy-Server 3 vermittelte Peer-to-Peer-Datenverbindung P2P zur Übertragung der Betriebsdaten D direkt auf den Client CB der weiteren IP-fähigen Anlagenkomponente 11 zu. Letztere kann, wie im Beispiel der FIG 3 gezeigt, über weitere Internet-Datenserver 13 sowie über nicht weiter gezeigte Datenserver im GSM/UMTS-Mobilfunknetz 21, 22 erfolgen. Im Gegensatz zum herkömmlichen Zugriff auf einen Webserver in der jeweiligen IP-fähigen Anlagenkomponente 1, 11 auf Basis des Client-Server-Modells können nun beide VoIP-Clients CA, CB als gleichberechtigte Partner aufeinander zugreifen. Ergänzend wird angemerkt, dass auch der Proxy-Server 3 selbst als Datenserver im Internet N fungieren kann.

Nach Beendigung der Übertragung der anlagenbezogenen Betriebsdaten D wird die Peer-to-Peer-Datenverbindung P2P vorzugsweise vom anrufenden Client CA wieder beendet und über die begleitende SIP-Datenverbindung SIP abgebaut. Wesentlich ist hier, dass anstelle der Übertragung von Audio- und Videodaten in Echtzeit, das heißt auf Basis eines Realtime-Internet-Protokolls (RTP), nun die Übertragung der Betriebsdaten D ohne Echtzeiterfordernis erfolgt, wie z. B. auf Basis eines (ausschließlichen) TCP/IP-Protokolls. Vorzugsweise werden die zu übertragenden Betriebsdaten D zuvor noch verschlüsselt.

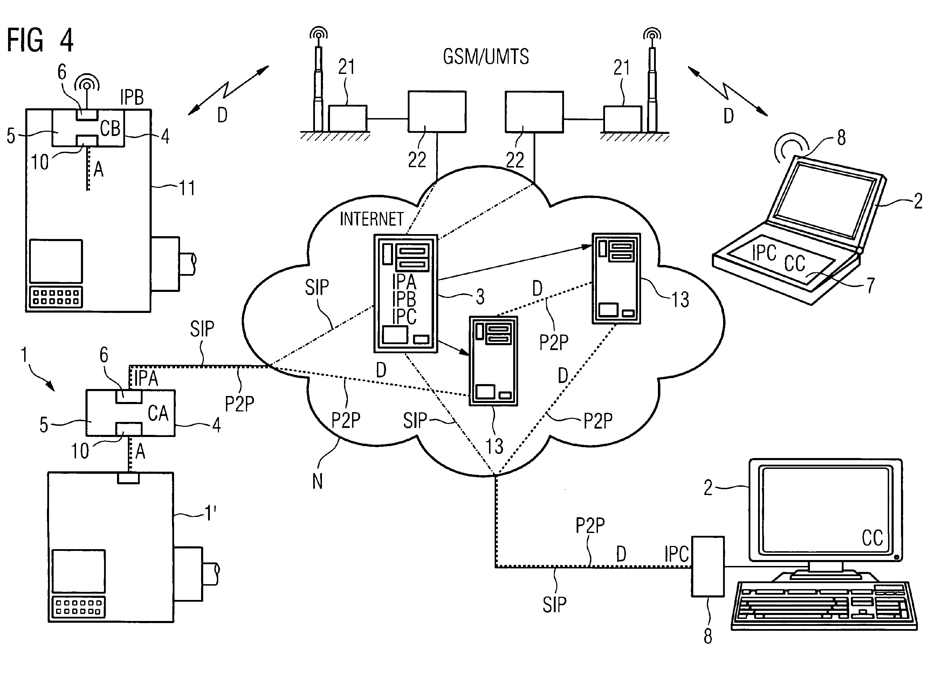

FIG 4 zeigt ein Beispiel möglicher vermittelter Peer-to-Peer-Datenverbindungen P2P zwischen IP-fähigen Anlagenkomponenten 1, 11 und IP-fähigen Bedien- und Beobachtungsgeräten 2 über das Internet N gemäß der Erfindung.

Zur Übertragung der anlagenbezogenen Betriebsdaten D wird nun ein zweiter VoIP-Client CC auf einer Steuereinheit 7 eines Bedien- und Beobachtungsgerätes 2 ausgeführt. Im Beispiel der FIG 4 sind zwei Bedien- und Beobachtungsgeräte 2 dargestellt. Das obere Gerät 2 ist beispielhaft ein Notebook für den mobilen Einsatz und das untere Gerät 2 ein Desktop-PC für den stationären Einsatz. Letzteres kann Teil einer Leit- oder Servicestelle sein. Beide Geräte 2 sind dazu vorgesehen, mögliche Bedienhandlungen, wie z. B. ein Software-Update, an den IP-fähigen Anlagenkomponenten 1, 11 über das Internet N im Sinne einer Fernwartung vorzunehmen. Zugleich können die empfangenen Betriebsdaten D, wie z. B. Beobachtungsdaten, auf einer Anzeigeeinheit der beiden Bedien- und Beobachtungsgeräte 2 zu Überwachungszwecken dargestellt werden.

Im Beispiel der FIG 4 erfolgt der Verbindungsaufbau durch den Client CC des rechts unten dargestellten Bedien- und Beobachtungsgerätes 2, initiiert durch einen Anwender dieses Gerätes 2. Der Anwender kann z. B. ein Servicemonteur sein. Dieser kann z. B. aus einem auf dem Bildschirm dargestellten elektronischen VoIP-Telefonbuch heraus eine IP-fähige Anlagenkomponente 1, 11 als VoIP-Teilnehmer auswählen und diese über den zweiten Client CC anrufen lassen. Der Aufbau der nachfolgenden Rufaufbau-Datenverbindungen SIP und der Peer-to-Peer-Datenverbindungen P2P erfolgt analog wie bei der vorherigen gemäß FIG 3.

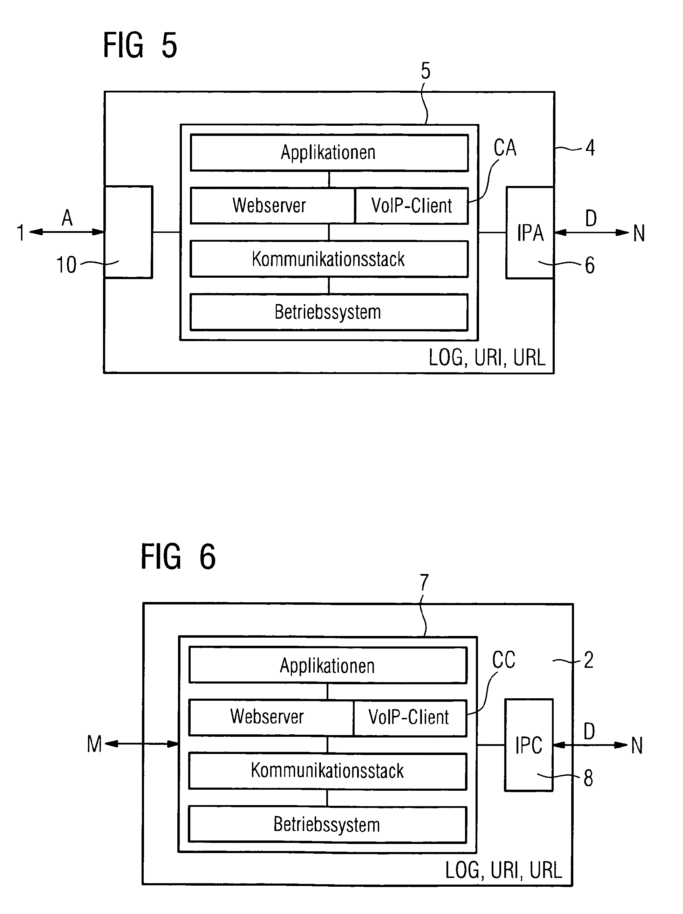

FIG 5 zeigt eine hierarchische Softwarestruktur eines beispielhaften erfindungsgemäßen VoIP-Gateways 4. Mit dem Bezugszeichen 5 ist die Steuereinheit bezeichnet, auf welcher auf unterster Softwareebene das Betriebssystem, wie z. B. Linux, ausgeführt wird. Darüberliegend ist ein Kommunikationsstack angeordnet, welcher die weiter darüberliegenden IP-Dienste wie Webserver und den erfindungsgemäßen ersten VoIP-Software-Client CA, CB bedient. Auf oberster Ebene sind mehrere ausführbare Applikationen bzw. Tasks vorhanden, wie z. B. ein Steuerungsprogramm für das VoIP-Gateway 4.

Der erste Software-Client CA ist mittels geeigneter Programmschritte dazu eingerichtet, Anlagedaten A der IP-fähigen Anlagenkomponente 1 über eine zweite Datenschnittstelle 10 zu empfangen, diese gegebenenfalls hinsichtlich des verwendeten Datenformats umzusetzen und in Form von Betriebsdaten D über eine erste Datenschnittstelle 6 in das Internet N zu übertragen. In umgekehrter Richtung kann der erste Software-Client CA dazu eingerichtet sein, über die erste Datenschnittstelle 6 empfangene Betriebsdaten D umzusetzen und diese in Form von Anlagedaten A an der zweiten Datenschnittstelle 10 auszugeben. Mit dem Bezugszeichen LOG ist eine elektronisch im VoIP-Gateway 4 gespeicherte eigene VoIP-Teilnehmerkennung bezeichnet. Gegebenenfalls kann auch eine Benutzerkennung sowie ein Kennwort mit abgespeichert sein. Mit URI sind elektronisch gespeicherte VoIP-Teilnehmerkennungen der weiteren IP-fähigen Anlagenkomponenten 1, 11 bezeichnet und mit URL eine dort gleichfalls gespeicherte Host-Adresse zum Lokalisieren eines zugehörigen VoIP-Proxy-Servers 3. Diese Daten LOG, URI, URL werden beim Starten des ersten Clients CA zum Parametrieren und zum anschließenden Registrieren beim Proxy-Server 3 durch diesen geladen. Mit IPA ist eine vom Proxy-Server 3 beim Verbindungsaufbau mitgeteilte IP-Adresse bezeichnet, über welche der jeweils andere Client über das Internet N erreicht werden kann.

FIG 6 zeigt eine hierarchische Softwarestruktur eines beispielhaften erfindungsgemäßen Bedien- und Beobachtungsgerätes 2. Mit dem Bezugszeichen 7 ist eine Steuereinheit des Bedien-und Beobachtungsgerätes 2 bezeichnet, auf welchem unter anderem ein zweiter VoIP-Software-Client CC ausgeführt wird. Der Client CC überträgt nach Aufforderung durch einen Anwender Betriebsdaten D, wie z. B. Bediendaten, über die Datenschnittstelle 8 und weiter über das Internet N zu einer ausgewählten IP-fähigen Anlagenkomponente 1, 11. Auf umgekehrtem Wege überträgt der Client CC angeforderte Betriebsdaten D, wie z. B. Beobachtungsdaten in Form von Mess- und Statuswerten, an eine Anzeigeeinheit M des Bedien- und Beobachtungsgerätes 2, wie z. B. an einen Monitor.

Zusammenfassend werden bei dem erfindungsgemäßen Verfahren anlagenbezogene Betriebsdaten D zwischen einer IP-fähigen Anlagenkomponente 1 und einer weiteren IP-fähigen Anlagenkomponente 11 vorzugsweise auf Basis eines Internet-Protokolls über das Internet N übertragen. Es werden die IP-fähigen Anlagenkomponenten 1, 11 bei einem VoIP-Provider als VoIP-Teilnehmer angemeldet. Es wird ein jeweiliger Software-VoIP-Client CA, CB der Anlagenkomponenten 1, 11 mit jeweils einer vom Provider zugewiesenen eigenen VoIP-Teilnehmerkennung LOG, mit vom Provider zugewiesenen VoIP-Teilnehmerkennungen URI der jeweils weiteren IP-fähigen Anlagenkomponenten 1, 11 und mit einer Host-Adresse URL zum Lokalisieren eines VoIP-Proxy-Servers 3 des Providers über das Internet N parametriert. Es wird der jeweilige Client CA, CB nach dem Starten beim Proxy-Server 3 mit seiner eigenen VoIP-Teilnehmerkennung LOG registriert. Es werden eine ereignis- oder zeitgesteuerte Rufaufbau-Datenverbindung SIP zum Proxy-Server 3 durch einen jeweiligen Client CA, CB auf Basis eines Signalisierungsprotokolls gestartet und die Teilnehmerkennung URI einer ausgewählten weiteren IP-fähigen Anlagenkomponente 1, 11 übertragen. Es wird eine Peer-to-Peer-Datenverbindung P2P zwischen den Clients CA, CB der IP-fähigen Anlagenkomponente 1, 11 und der ausgewählten weiteren IP-fähigen Anlagenkomponente 1, 11 auf Basis jeweils einer vom Proxy-Server 3 mitgeteilten IP-Adresse IPA, IPB des jeweils anderen Clients CA, CB aufgebaut. Es werden die anlagenbezogenen Betriebsdaten D über dieselbe Peer-to-Peer-Datenverbindung P2P anstelle der Übertragung von VoIP-Audio- und Videodaten übertragen. Vorzugsweise wird die Peer-to-Peer-Datenverbindung P2P nach der Datenübertragung wieder abgebaut.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Übertragen anlagenbezogener Betriebsdaten (D) zwischen einer IP-fähigen Anlagenkomponente (1) und einer weiteren IP-fähigen Anlagenkomponente (11) über das Internet (N), **gekennzeichnet durch** folgende Verfahrensschritte:
- Anmelden der IP-fähigen Anlagenkomponenten (1, 11) bei einem VoIP-Provider als VoIP-Teilnehmer,
- Parametrieren eines Software-Clients (CA, CB) der jeweiligen IP-fähigen Anlagenkomponenten (1, 11) mit einer jeweils vom Provider zugewiesenen eigenen VoIP-Teilnehmerkennung (LOG), mit jeweils vom Provider zugewiesenen VoIP-Teilnehmerkennungen (URI) der jeweils weiteren IP-fähigen Anlagenkomponenten (11) und mit einer Host-Adresse (URL) zum Lokalisieren eines VoIP-Proxy-Servers (3) des Providers über das Internet (N),
- Registrieren der jeweiligen Clients (CA, CB) beim Proxy-Server (3) mit der eigenen VoIP-Teilnehmerkennung (LOG) nach dem Starten,
- Starten einer ereignis- oder zeitgesteuerten Rufaufbau-Datenverbindung (SIP) zum Proxy-Server (3) **durch** den jeweiligen Client (CA, CB) auf Basis eines Signalisierungsprotokolls und Übermitteln der Teilnehmerkennung (URI) der ausgewählten weiteren IP-fähigen Anlagenkomponente (11),
- Aufbau einer Peer-to-Peer-Datenverbindung (P2P) zwischen dem Client (CA) der IP-fähigen Anlagenkomponente (1) und dem Client (CB) der ausgewählten weiteren IP-fähigen Anlagenkomponente (11) auf Basis jeweils einer vom Proxy-Server (3) mitgeteilten öffentlichen IP-Adresse (IPA, IPB), über welche der jeweils andere Client (CA, CB) über das Internet (N) erreicht werden kann,
- Übertragung der anlagenbezogenen Betriebsdaten (D) über dieselbe Peer-to-Peer-Datenverbindung (P2P) anstelle der Übertragung von VoIP-Audio- und Videodaten und
- Abbau der Peer-to-Peer-Datenverbindung (P2P).

2. Verfahren nach Anspruch 1, **dadurch gekennzeichnet, dass** eine stationäre oder mobile Rechnereinheit als weitere IP-fähige Anlagenkomponente (11) zum Empfangen und Visualisieren der anlagenbezogenen Betriebsdaten (D) verwendet wird.

3. Verfahren zum Bedienen, Beobachten und/oder Fernwarten einer IP-fähigen Anlagenkomponente (1, 11) mittels eines IP-fähigen Bedien- und Beobachtungsgerätes (2) über das Internet (N), wobei anlagenbezogene Betriebsdaten (D) zwischen der IP-fähigen Anlagenkomponente (1, 11) und dem Bedien- und Beobachtungsgerät (2) übertragen werden,
**gekennzeichnet durch** folgende Verfahrensschritte:
- Anmelden der IP-fähigen Anlagenkomponenten (1, 11) und des Bedien- und Beobachtungsgerätes (2) bei einem VoIP-Provider als VoIP-Teilnehmer,
- Parametrieren eines Software-Clients (CA-CC) der jeweiligen IP-fähigen Anlagenkomponenten (1, 11) und des Bedien- und Beobachtungsgerätes (2) mit einer jeweils vom Provider zugewiesenen eigenen VoIP-Teilnehmerkennung (LOG) sowie mit einer Host-Adresse (URL) zum Lokalisieren eines VoIP-Proxy-Servers (3) des Providers über das Internet (N),
- Parametrieren des Clients (CC) des Bedien- und Beobachtungsgerätes (2) mit vom Provider zugewiesenen VoIP-Teilnehmerkennungen (URI) der IP-fähigen Anlagenkomponenten (1, 11),
- Registrieren der jeweiligen Clients (CA-CC) beim Proxy-Server (3) mit der eigenen VoIP-Teilnehmerkennung (LOG) nach dem Starten,
- Starten einer anwenderseitig initiierten Rufaufbau-Datenverbindung (SIP) zum Proxy-Server (3) über den Client (CC) des Bedien- und Beobachtungsgerätes (2) auf Basis eines Signalisierungsprotokolls und Übermitteln der Teilnehmerkennung (URI) einer ausgewählten IP-fähigen Anlagenkomponente (1, 11),
- Aufbau einer Peer-to-Peer-Datenverbindung (P2P) zwischen dem Client (CC) des Bedien- und Beobachtungsgerätes (2) und dem Client (CA, CB) der ausgewählten IP-fähigen Anlagenkomponente (1, 11) auf Basis jeweils einer vom Proxy-Server (3) mitgeteilten öffentlichen IP-Adresse (IPA-IPC), über welche der jeweils andere Client (CA-CC) über das Internet (N) erreicht werden kann,
- Übertragung der anlagenbezogenen Betriebsdaten (D) über dieselbe Peer-to-Peer-Datenverbindung (P2P) anstelle der Übertragung von VoIP-Audio- und Videodaten und
- Abbau der Peer-to-Peer-Datenverbindung (P2P).

4. Verfahren nach einem der vorangegangenen Ansprüche, **dadurch gekennzeichnet, dass** die über die Peer-to-Peer-Datenverbindung (P2P) übertragenen, anlagenbezogenen Daten (D) verschlüsselt werden.

5. Anwendung des Verfahrens nach einem der vorangegangenen Ansprüche in der Anlagen-, Fertigungs- oder Automatisierungstechnik.

6. Erster Software-Client (CA, CB) zum Ausführen auf einer prozessorgestützten Steuereinheit (5) eines VoIP-Gateways (4), wobei das VoIP-Gateway (4) mit zumindest einer Anlagenkomponente (1') innerhalb derselben Anlage und mit dem Internet (N) datentechnisch verbunden ist und wobei der erste Software-Client (CA, CB) zum Durchführen der nachfolgenden Verfahrensschritte entsprechende, auf der Steuereinheit (5) des VoIP-Gateways (4) ausführbare Programmschritte aufweist:
- Parametrieren mit einer eigenen VoIP-Teilnehmerkennung (LOG) eines VoIP-Providers, mit VoIP-Teilnehmerkennungen (URI) weiterer IP-fähiger Anlagenkomponenten (11) und mit einer Host-Adresse (URL) zum Lokalisieren eines VoIP-Proxy-Servers (3) des Providers über das Internet (N),
- Registrieren beim Proxy-Server (3) mit der eigenen VoIP-Teilnehmerkennung (LOG),
- Starten einer ereignis- oder zeitgesteuerten Rufaufbau-Datenverbindung (SIP) zum Proxy-Server (3) auf Basis eines Signalisierungsprotokolls und Übermitteln der Teilnehmerkennung (URI) einer ausgewählten weiteren IP-fähigen Anlagenkomponente (11),
- Aufbau einer Peer-to-Peer-Datenverbindung (P2P) mit dem Client (CA, CB) der ausgewählten weiteren IP-fähigen Anlagenkomponente (11) auf Basis einer vom Proxy-Server (3) mitgeteilten öffentlichen IP-Adresse (IPA, IPB), über welche der Client (CA, CB) der weiteren IP-fähigen Anlagenkomponente (11) über das Internet (N) erreicht werden kann,
- Übertragen von anlagenbezogenen Betriebsdaten (D) über dieselbe Peer-to-Peer-Datenverbindung (P2P) von und zu der ausgewählten weiteren IP-fähigen Anlagenkomponente (11) und
- Abbau der Peer-to-Peer-Datenverbindung (P2P).

7. Zweiter Software-Client (CC) zum Ausführen auf einer prozessorgestützten Steuereinheit (7) eines IP-fähigen Bedien-und Beobachtungsgerätes (2), wobei die Steuereinheit (7) mit einer Datenschnittstelle (8) zur Datenübertragung über das Internet (N) verbunden ist und wobei der zweite Software-Client (CC) zum Durchführen der nachfolgenden Verfahrensschritte entsprechende, auf der Steuereinheit (7) des IP-fähigen Bedien- und Beobachtungsgerätes (2) ausführbare Programmschritte aufweist:
- Parametrieren mit einer eigenen VoIP-Teilnehmerkennung (LOG) eines VoIP-Providers, mit VoIP-Teilnehmerkennungen (URI) von zumindest einer IP-fähigen Anlagenkomponente (1, 11) und mit einer Host-Adresse (URL) zum Lokalisieren eines VoIP-Proxy-Servers (3) des Providers über das Internet (N),
- Registrieren beim Proxy-Server (3) mit der eigenen VoIP-Teilnehmerkennung (LOG),
- Starten einer anwenderseitig initiierten Rufaufbau-Datenverbindung (SIP) zum Proxy-Server (3) auf Basis eines Signalisierungsprotokolls und Übermitteln der Teilnehmerkennung (URI) einer ausgewählten IP-fähigen Anlagenkomponente (1, 11),
- Aufbau einer Peer-to-Peer-Datenverbindung (P2P) mit dem ersten Client (CA, CB) der ausgewählten IP-fähigen Anlagenkomponente (1, 11) auf Basis einer vom Proxy-Server (3) mitgeteilten öffentlichen IP-Adresse (IPA, IPB), über welche der erste Client (CA, CB) der ausgewählten IP-fähigen Anlagenkomponente (1, 11) über das Internet (N) erreicht werden kann,
- Übertragen von anlagenbezogenen Betriebsdaten (D) über dieselbe Peer-to-Peer-Datenverbindung (P2P) von und zu der ausgewählten IP-fähigen Anlagenkomponente (1, 11) anstelle des Übertragens von VoIP-Audio- und Videodaten und
- Abbau der Peer-to-Peer-Datenverbindung (P2P).

8. Software-Client (CA-CC) nach Anspruch 6 oder 7, wobei der Software-Client (CA-CC) Programmroutinen zum verschlüsselten Übertragen der anlagenbezogenen Betriebsdaten (D) aufweist.

9. Datenspeichermedium mit einem in maschinenlesbarer Form gespeicherten Software-Client (CA-CC) nach einem der Ansprüche 6 bis 8 zum Ausführen auf einer Steuereinheit (5) einer IP-fähigen Anlagenkomponente (1, 11) und/oder auf einer Steuereinheit (7) eines IP-fähigen Bedien- und Beobachtungsgerätes (2).

10. VoIP-Gateway für zumindest eine Anlagenkomponente (1', 11') innerhalb derselben Anlage mit
- einer ersten Datenschnittstelle (10) zum Austausch von Anlagendaten (A) mit zumindest einer Anlagensteuerung der zumindest einen Anlagenkomponente (1', 11'),
- einer zweiten Datenschnittstelle (6) zum Austausch von anlagenbezogenen Betriebsdaten (D) über das Internet (N),
- einer prozessorgestützten Steuereinheit (5) zum Ausführen von Programmschritten eines Computerprogramms zum Umsetzen der Daten (A, D) zwischen der ersten und zweiten Datenschnittstelle (10, 6) und
- einem auf der Steuereinheit (5) ausführbaren ersten Software-Client (CA, CB) nach Anspruch 6 oder 8, um anlagenbezogene Betriebsdaten (D) mit einer ausgewählten weiteren IP-fähigen Anlagenkomponente (1, 11) und/oder mit einem IP-fähigen Bedien- und Beobachtungsgerät (2) jeweils über eine von einem VoIP-Proxy-Server (3) vermittelte Peer-to-Peer-Datenverbindung (P2P) auszutauschen.

11. IP-fähige Anlagenkomponente (1, 11) mit einem integrierten VoIP-Gateway (4) nach Anspruch 10.

12. IP-fähige Anlagenkomponente (1, 11) nach Anspruch 11, **dadurch gekennzeichnet, dass** die IP-fähige Anlagenkomponente (1, 11) einen Teil einer technischen Anlage umfasst oder ein Fertigungsgerät, ein Automatisierungsgerät, eine Maschine oder eine Fernwirkkomponente ist.

13. Bedien- und Beobachtungsgerät zum Bedienen, Beobachten und/oder Fernwarten einer IP-fähigen Anlagenkomponente (1, 11), wobei das Bedien- und Beobachtungsgerät eine Datenschnittstelle (8) zur Datenübertragung über das Internet (N) aufweist und wobei das Bedien- und Beobachtungsgerät eine prozessorgestützte Steuereinheit (7) zum Ausführen von Programmschritten eines Computerprogramms aufweist,
**dadurch gekennzeichnet, dass** das Bedien- und Beobachtungsgerät einen auf der Steuereinheit (7) ausführbaren zweiten Software-Client (CC) nach Anspruch 7 oder 8 zur Datenübertragung von anlagenbezogenen Betriebsdaten (D) mit einer anwenderseitig auswählbaren IP-fähigen Anlagenkomponente (1) über eine von einem VoIP-Proxy-Server (3) vermittelte Peer-to-Peer-Datenverbindung (P2P) aufweist.
